# EUROPEAN PATENT SPECIFICATION

(11) **EP 2 638 121 B1**
(45) Date of publication and mention of the grant of the patent: **26.04.2017**
(21) Application number: 11779877.7
(22) Date of filing: 26.10.2011
(51) Int. Cl.: C09J 7/02

(54) **COATING, AND METHOD FOR PRODUCING SUCH COATING**
BESCHICHTUNG, UND VERFAHREN ZUR HERSTELLUNG EINEr SOLCHEN BESCHICHTUNG
REVÊTEMENT, ET PROCÉDÉ DE FABRICATION D' UN TEL REVÊTEMENT

(30) Priority: 12.11.2010 NL 2005685
(43) Date of publication of application: 18.09.2013
(73) Proprietor: Visker Beheer B.V., 4825 AX Breda (NL)
(72) Inventor: VISKER, Antonius Cornelis Hendrikus Maria, NL-4823 KE Breda (NL)
(74) Representative: Grootscholten, Johannes A.M.
(86) International application number: PCT/NL2011/050729
(87) International publication number: WO 2012/074380

(56) References cited:
- WO-A1-91/06604
- WO-A2-2005/053934
- FR-A- 2 124 422
- FR-A- 2 242 418
- FR-A- 2 704 477
- FR-A- 2 719 065
- JP-A- 2003 001 629
- NL-C- 1 002 455
- US-A- 4 091 142
- US-A- 4 268 337
- US-A- 4 370 386
- US-A- 4 372 800
- US-A- 4 421 827
- US-A- 5 256 708
- US-A- 5 256 709
- US-A- 5 262 457
- US-A- 5 733 643
- US-A- 5 929 142

## Description

The present invention relates to direct application of coating layers to substrates, in particular application of lacquer layers or paint layers. The invention further relates to a coating suitable for this purpose and a method for manufacturing such a coating, according to claims 1-12.

Generally used for the purpose of applying lacquer or paint layers to a surface (referred to more generally in this application as respectively a coating layer and a substrate) are liquid raw materials which are to some extent viscous, such as liquid paints and lacquers. These raw materials do however have a significant number of drawbacks.

Firstly, use is made of organic solvents in most paints and lacquers. These solvents are harmful to the health of those working with such paints and lacquers, and therefore require special precautionary measures. In addition, the use of organic solvents is harmful to the environment.

Another drawback of these liquid raw materials is that applying a coating layer is labourious. It is moreover difficult here to precisely determine the thickness of the layer that is applied.

In addition, it takes a relatively long time before the layer applied to a surface has cured: about 3 days is required for an optimal result. This is the reason that in the wood-processing industry the step of coating or lacquering a wooden object is therefore often omitted and left to the end user. Valuable time is thus saved in the production process.

In addition to the immediate time loss of the drying process, a number of related drawbacks can also be mentioned:
A coating layer freshly applied to a substrate is viscous and can thus shape itself to the surface, which in the case of wood can be slightly porous. At the position of pores in the wood blisters (also: 'craters') can form in the applied coating layer. These blisters undermine the protective action of the coating layer.

Another known drawback of the drying process of a freshly applied coating layer is that in wet state the coating layer can absorb all sorts of contaminants from the ambient air, such as dust, sand, rain or dew moisture. For a good final result the coating layer will therefore have to be protected during the drying process.

A further drawback of the drying process is that the coating layer may leave a stain when a person comes into contact with the coating layer too soon or when the product to which the coating layer is applied is finished too soon.

Many conditions thus influence the quality of the final result obtained from the cured lacquer layer or paint layer. The final result will vary substantially as a result, which is undesirable in many cases. A significant drawback is moreover that for reasons of efficiency the wood-processing industry is forced in many cases to produce wood products which are still uncoated.

Here, the disclosure of JP-2003/001629 is acknowledged as prior art, relative to which the invention is novel with respect to at least some features defined in the appended independent claims. WO-A-91/6604 discloses a similar coating and method, albeit without the impregnation with a dispersion of a binder. The object of the present invention is to reduce or obviate one or more of the above stated drawbacks. The invention also has for its object to provide a coating with which a coating layer can be applied directly to a substrate without further time-consuming follow-up treatments.

According to a first aspect, the invention comprises for this purpose a coating for directly applying a coating layer to a substrate, the coating comprising a coating layer based on a material of a cured polyester and a cured polyacrylate, and wherein a support fabric is integrated into the material of the coating layer on a first side of the coating layer.

The cured polyacrylate and cured polyester is understood to mean a material which is completely reacted, i.e. material which is fully polymerized. The coating layer based on this material therefore has the important feature that it forms one whole which cannot disintegrate. The curing can be carried out in any conceivable manner, for instance by air-drying, IR radiation or under UV light. Alternatively, the polymer can be applied as a layer in powder form ('powder lacquer') which fuses at increased temperature to form a layer which then cures to form a coating layer. The cured coating layer thus forms a stable integral structure, and is in fact a ready-to-use coating layer which need only be applied to an intended substrate, after which no further drying or further treatment is necessary.

With the coating according to the invention a coating layer can thus be applied directly to a substrate, wherein no further solvents are released from the coating layer and no further finishing treatment of drying and curing of the coating layer is necessary.

Surprisingly, it has moreover been found that the cured polyester and polyacrylate has, as the coating layer, a sufficient porosity to provide a passage for air and moisture which may be enclosed between the substrate and the coating layer during application of the coating layer. This porosity is particularly advantageous when an adhesive layer (for instance based on a curable polymer) is applied between substrate and coating layer, wherein the adhesive layer must still dry in the air. Further details of the application of the coating layer to a substrate are discussed below.

For comparison purposes it is noted that for instance a coating layer of cured polyurethane does not possess the required degree of porosity and an additional modification in the form of through-openings or perforations is therefore necessary to obtain a coating layer of sufficiently porous character.

The coating layer according to the invention can otherwise be provided with additional through-openings or perforations in order to increase the porosity.

The coating layer according to the invention also comprises a support fabric, which support fabric is present integrated in the material of the coating layer on a first side of the coating layer. The support fabric can be of a woven or non-woven type, for which common fibres such as polyester fibres are used.

The support fabric is integrated in the material, i.e. open spaces between the fibres of the support fabric are filled with cured material of the coating layer. The coating layer and the support fabric thus form one whole. Because the support fabric is present on a first side of the coating layer, this side has determined features on the surface toward which the support fabric makes a significant contribution.

It has been found that the support fabric on the one hand enhances the integrity of the coating layer (whereby undesired tearing is prevented) and on the other improves the adhering application to a substrate. A factor in this latter is that the first side of the coating layer is characterized by the structure of the support fabric, for which it is the case that on the surface a part of the open spaces between the fibres is not wholly filled with material of the coating layer. The first side of the coating layer thereby allows an adhesive layer applied between substrate and coating layer to penetrate properly into the first side of the coating layer.

In addition, the support fabric makes it possible to apply a coating layer in simple manner to a substrate which has irregular surface characteristics. In the case of a wooden substrate, the surface of which is assembled from different pieces of wood, the surface structure will change per piece of wood. A special pretreatment is generally necessary to ensure a good adhesion of a coating layer over the whole surface of the substrate. The surface structure of the substrate must in fact be levelled here. When the support fabric is present on a first side of the coating layer however, it has been found that this special pretreatment is no longer necessary.

The support fabric generally has a levelling effect on the coating layer once it has been applied to a substrate.

Finally, the coating according to the invention has the advantage that no special requirements need be set in respect of transport and storage thereof, since the coating layer has already cured and the coating is thus no longer reactive. This in contrast to many traditional paints which are designated hazardous substances, a reason why legal requirements are imposed for the storage and transport thereof.

The coating layer of the coating according to the invention comprises a cured polyester and cured polyacrylate, which is preferably cured by means of electron radiation.

The curing of polymers by means of electron radiation is also referred to in the field as electron beam curing (EBC). The advantages of a polymer cured in such a manner are numerous:
Firstly, the hardness of the obtained coating layer is substantially higher than a traditionally applied paint layer which is allowed to cure on the substrate by drying in air. The same applies for the high-gloss quality which can be achieved with a coating layer cured with EBC.

The durability of the obtained coating layer is also increased, particularly in respect of scratch resistance, colour fastness and weathering resistance. An additional advantage hereof is that the coating layer also substantially increases the durability of the substrate to which it is applied. The quality of a substrate (for instance of determined types of wood) whose durability is relatively low can thus be improved.

A further practical advantage is that the obtained coating layer can be readily abraded and overpainted.

An EBC-cured coating layer consists of polymers which are optimally cross-linked to form a dense network structure. It is precisely for such a coating layer that the advantageous effect of the support fabric integrated into the coating layer is even more relevant: in addition to being hard, an EBC-cured coating layer is also slightly brittle, which could adversely affect the integrity of the layer. The hardness can also have an adverse effect on the ability of an adhesive layer to adhere to the coating layer. The support fabric guarantees that these two drawbacks do not occur.

In the coating according to the invention the support fabric is more preferably impregnated with a binder.

The support fabric is advantageously impregnated with a binder such as a dispersion of an acrylate resin. This improves the unifying of the support fabric with the material of the coating layer on the one hand and the adhering application of the first side of the coating layer to a substrate on the other.

The coating layer of the coating according to the invention preferably comprises a removable protective layer on a second side of the coating layer.

This side of the coating layer can thus be handled without being touched directly. The second side is the visual side, i.e. the side of the coating layer which is visible after being applied to a substrate. The protective layer can be manufactured from a suitable (transparent) film of for instance polyethylene or polypropylene and is removable from the coating layer. The surface roughness of the film side lying against the coating layer moreover influences the gloss quality of the coating layer when the whole is applied to a substrate and the protective layer is finally removed therefrom. In the case of a very low roughness of the protective layer a coating layer is obtained which has the appearance of a high-gloss lacquer layer. As the roughness increases an eggshell gloss is first obtained, and subsequently a matt gloss.

The degree of high-gloss lacquer layer which can be achieved with the invention - particularly when the coating layer is cured by electron beam curing - is higher than that achieved with a traditional paint of high-gloss quality which is applied wet to a substrate.

The removable protective layer also has a second advantage in that it protects a product coated with the coating during transport thereof, and need only be removed when taken into use.

The protective layer is advantageously provided with a relief on the side lying against the coating layer. As will be elucidated below, the coating layer to be applied can thus be provided with an opposite relief. Such a relief may for instance be desirable if the applied coating layer must have anti-slip properties.

In the coating according to the invention an adhesive layer is applied, if desired, to the first side of the coating layer. This adhesive layer serves to adhere the coating to a substrate. The coating can thus be applied adhering to a substrate without an adhesive layer having to be applied in a separate step, as will be further discussed below in the context of the second aspect of the invention.

The first side of the coating according to the invention is preferably provided with a carrier layer which can be removed from the coating layer.

Owing to such a carrier layer it is possible to handle the first side of the cured coating layer without touching it directly, whereby the quality thereof is ensured, this being advantageous for the adhesion to a substrate. The carrier layer can be a (transparent) film of for instance polyethylene or polypropylene.

An alternative material for the carrier layer and for the protective layer is a biologically degradable starch-based polymer, with corresponding advantages.

With particular preference the coating according to the invention comprises the following additional features of the coating layer:
The coating layer comprises a dye or pigment. This provides the option of providing the coating layer with a specific colour, a specific colour pattern or a determined image.

In the absence of a dye or pigment the lacquer layer is preferably transparent.

The coating layer comprises a non-woven or woven fabric. Such a coating layer has an increased strength, which is advantageous when a carrier layer or a protective layer is removed, and for the strength of the coating layer after it is applied to a substrate. Particularly the integrity of the coating layer can be further enhanced by incorporating super-strong fibres therein, such as polyamides, for instance 'Dyneema' fibres. If desired, these super-strong fibres form part of the support fabric.

The coating layer comprises an elasticity-increasing additive. When applying the coating layer to a substrate it is advantageous that it has a suitable elasticity and flexibility. This moreover contributes toward a stable, ready-to-use coating layer which does not disintegrate when a carrier layer or a protective layer is removed. The elasticity-increasing additive thus provides the option of setting a suitable flexibility.

Determined functional substances, such as insecticides or fragrances, are moreover possibly incorporated in the coating layer. In addition, electronic components such as LEDs or determined chips, which add a corresponding functionality to the coating layer, can be incorporated in the coating layer.

Spacers are provided on a surface side of the coating layer. The advantage hereof is that, when the coating layer is applied to a substrate, the coating layer lies at the same distance over the whole surface of the substrate. This enhances the aesthetic result obtained. The spacers preferably form a whole with the coating layer. One way this can be achieved is by providing a side of the coating layer with a relief pattern.

The coating layer preferably has a thickness of 0.0010 to 0.400 mm, more preferably 0.010 to 0.100 mm. Such a thickness is found to be highly suitable for the desired use.

It is further recommended for the coating according to the invention to be provided in the form of strips. Such an embodiment allows the coating layer to be applied in strips, this providing practical advantages in the coating of large surfaces such as walls and doors.

The coating according to the invention is more preferably provided in the form of a roll. Such a form allows a coating layer with a large area to be reduced considerably in size for the purpose of storage and transport. A roll is moreover highly suitable for applying to a substrate, particularly when a carrier layer must simultaneously be removed.

The intended object of the invention, a ready-to-use coating layer which can be applied to a substrate in a single operation, is achieved without time-consuming further treatment.

Such a method of application as according to the present invention is suitable for both a manual and mechanical manner of application. The invention thus makes it possible for instance for the wood-processing industry to provide wooden products with a coating layer mechanically, without time loss occurring for drying the coating layer.

The adhesive layer advantageously comprises a not wholly cured binder such as a primer or an undercoat which, after curing thereof, forms an intermediate layer which adheres the coating layer to the substrate. A good and durable adhesion of the coating layer to the substrate is thus obtained. A dispersion of acrylate - optionally reinforced with polyurethane - is for instance used as primer.

As an alternative to applying an adhesive layer to the substrate as described above, an adhesive layer can be applied to the support fabric of the coating prior to application of the coating layer to the substrate.

It is otherwise noted that the curing of an adhesive layer generally takes between fifteen minutes and several hours. The position of the coating can therefore still be changed shortly after application, for instance when application has not been carried out as desired.

When applying the coating layer to a substrate, the following is also relevant in the choice of the type of adhesive layer:
When a pasty adhesive layer is used, a support fabric having a relatively smooth surface is preferably applied in the coating layer. When a liquid, viscous adhesive layer is used, a support fabric which is slightly voluminous and 'fluffy' is preferably applied in the coating layer.

According to a third aspect, the invention relates to a method for manufacturing a coating, comprising the steps of:
- providing a support fabric;
- applying a prepolymer of a polyester and polyacrylate to a side of the support fabric;
- arranging a protective layer on the prepolymer;
- curing the prepolymer.

A coating is thus manufactured according to the invention which provides the advantages already discussed above. The term prepolymer is understood to mean a polymerizable mixture which has not yet cured, or insufficiently so.

It is noted for the sake of clarity that, after curing of the prepolymer, a polymer layer is obtained into which the support fabric is integrated.

According to a first preferred method according to the invention the above stated steps are performed successively in the indicated sequence. The step of arranging a protective layer can optionally be omitted.

As additional step in the above stated method, a carrier layer on which the support fabric is then arranged is provided prior to the above stated steps.

As further additional step in the above stated method, an adhesive layer is applied to the first side of the coating layer after curing of the prepolymer.

As additional step in the above stated method, a carrier layer on which the support fabric is then arranged is provided prior to the above stated steps.

As further additional step in the above stated method, an adhesive layer is applied to the first side of the coating layer after curing of the prepolymer.

In the method according to the invention the support fabric is impregnated with a binder before the step of applying the prepolymer is performed. Impregnation takes place here with a dispersion of a binder, for instance of an acrylate resin.

In the method according to the invention the protective layer is more preferably provided with a relief on the side applied to the prepolymer. This achieves that during the manufacturing process the relief of the protective layer presses into the prepolymer and makes an imprint with an opposite relief in this layer. This is possible because the prepolymer is by definition not yet cured and is therefore a deformable substance.

In the method according to the invention the polyester and polyacrylate are cured with special preference by 'electron beam curing' (EBC), i.e. curing using electron radiation. It has been found that such materials achieve the advantages of the invention, while the curing method entails relatively low energy costs.

In a fourth aspect the invention relates to a coating obtained via the method according to the third aspect of the invention.

The invention is elucidated herein below with reference to the accompanying drawings, in which:
- Figure 1 is a schematic cross-section of a coating according to a first embodiment of the invention;
- Figure 2 is a schematic cross-section of a coating layer which is applied to a substrate;
- Figure 3 is a three-dimensional view of a substrate to which a coating layer according to the invention is applied;
- Figure 4 is a cross-section of a coating layer with spacers which is applied to a substrate;
- Figure 5 is a schematic cross-section of a coating according to a second embodiment of the invention.

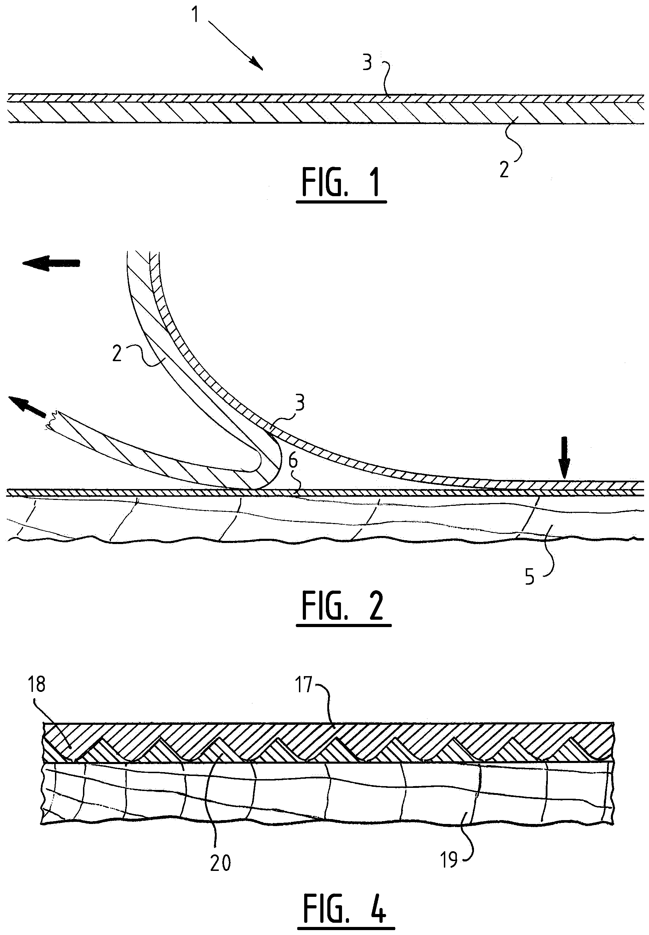

Figure 1 shows a coating 1 comprising a flat, flexible carrier layer 2 having thereon a coating layer 3 of a polyacrylate-based cured paint. In order to facilitate separation of carrier layer 2 and coating layer 3, carrier layer 2 has paint-repellent properties.

Figure 2 shows a method of applying a coating layer 3 to a substrate 5 making use of a coating according to Figure 1. In a movement from right to left carrier layer 2 is separated here from coating layer 3 and the released coating layer is subsequently then pressed against an adhesive layer 6 (in the direction of the thick vertical arrow). Adhesive layer 6 is applied beforehand to substrate 5.

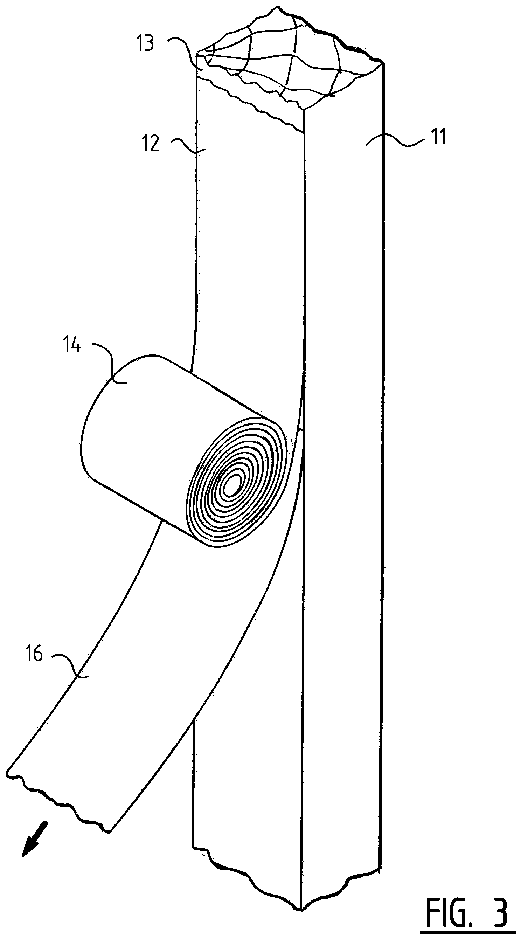

Figure 3 shows a substrate 11 to which a coating layer 12 is applied from a coating 14 having the form of a roll. On this roll 14 coating layer 13 is still on carrier layer 16. When coating layer 12 is applied to substrate 11, coating layer 12 is separated from carrier layer 16 in a manner similar to the view of Fig. 2. An adhesive layer 13 is applied beforehand to substrate 11. Figure 3 shows how easily applying a strip of coating material 12 to a substrate 11 can be carried out, particularly when coating 14 is embodied in the form of a roll.

Figure 4 shows a coating layer 17 which is provided with spacers 18. Spacers 18 form a whole with coating layer 17 and are as it were a relief pattern on one side of the coating layer. Coating layer 17 is applied to a substrate 19 to which an adhesive layer 20 has been applied. Owing to spacers 18 the upper side of coating layer 17 is situated at the same distance over the whole surface of substrate 19. An aesthetically attractive final result is in this way obtained.

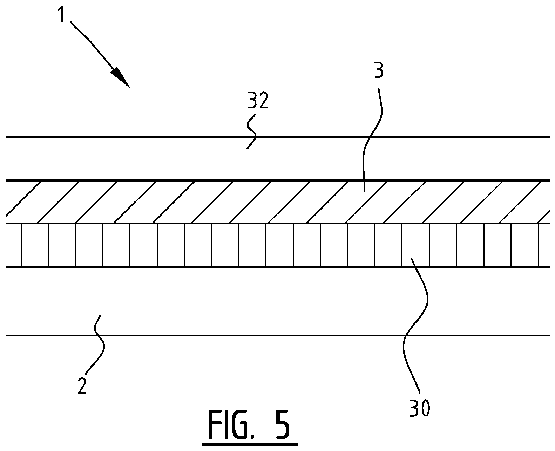

Figure 5 shows a coating 1 comprising a flat, flexible carrier layer 2 having thereon a coating layer 3 of a polyacrylate-based cured paint and a non-woven support fabric 30, which fabric 30 is impregnated with a binder on the basis of a dispersion of an acrylate resin. Support fabric 30 is shown for the sake of clarity as a separate layer, although it must be understood that the support fabric forms a unified whole with coating layer 3, i.e. is integrated into coating layer 3. A protective film 32 of polyethylene is arranged on the upper side of coating layer 3.

It is noted for the sake of completeness that the coating according to the invention is not limited to the coating in figures 1-5, in which a carrier layer is present. It is particularly noted that coatings of the invention according to the appended independent claims can be embodied with alternative or additional features relative to those in the above disclosure and in the appended drawing. Such an embodiment is thus also a preferred embodiment of the present invention.

## Claims

1. A coating configured for direct application of a coating layer onto a substrate, the coating comprising:
- the coating layer based on a material of a cured polyester and a cured polyacrylate, and
- a woven or non-woven support fabric, which is integrated into the material of the coating layer on a first side of the coating layer prior to curing thereof, where open spaces in the support fabric between the fibers of the support fabric are filled with the cured materials of the coating layer, and wherein the support fabric is impregnated with a dispersion of a binder, for instance of an acrylate resin.

2. The coating as claimed in claim 1, wherein the coating layer based on the material of the cured polyester and the cured polyacrylate is cured by means of electron radiation.

3. The coating as claimed in any of the foregoing claims, wherein the coating layer further comprises a removable protective layer on a second side of the coating layer, and the protective layer is herein preferably provided with a relief on the side lying against the coating layer.

4. The coating as claimed in any of the foregoing claims, wherein an adhesive layer is applied to the first side of the coating layer.

5. The coating as claimed in any of the foregoing claims, wherein the first side of the coating layer is also provided with a carrier layer which can be removed from the coating layer.

6. The coating as claimed in any of the foregoing claims, wherein the coating layer comprises a dye or pigment.

7. The coating as claimed in any of the foregoing claims, wherein the coating layer comprises fibres.

8. The coating as claimed in any of the foregoing claims, wherein the coating layer comprises an elasticity-increasing additive.

9. The coating as claimed in any of the foregoing claims, wherein spacers are provided on a surface side of the coating layer.

10. The coating as claimed in any of the foregoing claims, in a form of strips or a roll.

11. Method for manufacturing a coating according to any one of claims 1 to 10, comprising the steps of:
- providing the woven or non-woven support fabric;
- applying a prepolymer of a polyester and polyacrylate to a side of the support fabric;
- curing the prepolymer, whereby open spaces in the support fabric between the fibers of the support fabric are filled with the cured materials of the coating layer,
- wherein the support fabric is impregnated with dispersion of a binder, for instance an acrylate resin, before the step of applying the prepolymer is performed.

12. The method for manufacturing a coating according to claim 11 comprising arranging a protective layer on the prepolymer.

## Patentansprüche

1. Überzug, der für ein direktes Aufbringen einer Überzugsschicht auf einem Substrat ausgelegt ist, wobei der Überzug umfasst:
- die Überzugsschicht, die auf einem Material eines gehärteten Polyesters und eines gehärteten Polyacrylats basiert, und
- einen gewebten oder nicht gewebten Tragstoff, welcher in das Material aus der Überzugsschicht auf einer ersten Seite der Überzugsschicht vor deren Härten integriert ist, wobei offene Räume in dem Tragstoff zwischen den Fasern des Tragstoffs mit den gehärteten Materialien der Überzugsschicht gefüllt sind und wobei der Tragstoff mit einer Dispersion eines Bindemittels, beispielsweise einem Acrylatharz imprägniert ist.

2. Überzug nach Anspruch 1, wobei die auf dem Material des gehärteten Polyesters und des gehärteten Polyacrylats basierte Überzugsschicht mittels Elektronenbestrahlung gehärtet wird.

3. Überzug nach einem der vorhergehenden Ansprüche, wobei die Überzugsschicht ferner eine entfernbare Schutzschicht auf einer zweiten Seite der Überzugsschicht umfasst und wobei die Schutzschicht hier vorzugsweise mit einem Relief auf der Seite versehen ist, die an der Überzugsschicht liegt.

4. Überzug nach einem der vorhergehenden Ansprüche, wobei eine Klebschicht auf die erste Seite der Überzugsschicht aufgebracht ist.

5. Überzug nach einem der vorhergehenden Ansprüche, wobei die erste Seite der Überzugsschicht außerdem mit einer Trägerschicht versehen ist, die von der Überzugsschicht entfernt werden kann.

6. Überzug nach einem der vorhergehenden Ansprüche, wobei die Überzugsschicht einen Farbstoff oder ein Pigment umfasst.

7. Überzug nach einem der vorhergehenden Ansprüche, wobei die Überzugsschicht Fasern umfasst.

8. Überzug nach einem der vorhergehenden Ansprüche, wobei die Überzugsschicht einen elastizitätssteigernden Zusatz umfasst.

9. Überzug nach einem der vorhergehenden Ansprüche, wobei auf einer Oberflächenseite der Überzugsschicht Abstandsstücke vorgesehen sind.

10. Überzug nach einem der vorhergehenden Ansprüche in einer Form von Streifen oder einer Rolle.

11. Verfahren zum Herstellen eines Überzugs nach einem der Ansprüche 1 bis 10, umfassend die Schritte:
- Bereitstellen des gewebten oder nicht gewebten Tragstoffs,
- Aufbringen eines Vorpolymers eines Polyesters oder Polyacrylats auf eine Seite des Tragstoffs,
- Härten des Vorpolymers, wobei offene Räume in dem Tragstoff zwischen den Fasern des Tragstoffs mit den gehärteten Materialien der Überzugsschicht gefüllt werden,
- wobei der Tragstoff mit einer Dispersion eines Bindemittels, beispielsweise einem Acrylatharz imprägniert wird, bevor der Schritt des Aufbringens des Vorpolymers ausgeführt wird.

12. Verfahren zum Herstellen eines Überzugs nach Anspruch 11, umfassend ein Anordnen einer Schutzschicht auf dem Vorpolymer.

## Revendications

1. Revêtement configuré pour l'application directe d'une couche de revêtement sur un substrat, le revêtement comprenant :
- la couche de revêtement à base d'un matériau de polyester durci et d'un polyacrylate durci, et
- un tissu de support tissé ou non tissé, qui est intégré au matériau de la couche de revêtement sur un premier côté de la couche de revêtement avant son durcissement, les espaces ouverts situés dans le tissu de support entre les fibres du tissu support étant remplis avec les matériaux durcis de la couche de revêtement, et
dans lequel le tissu de support est imprégné avec une dispersion d'un liant, comme par exemple d'une résine d'acrylate.

2. Revêtement selon la revendication 1, dans lequel la couche de revêtement à base du matériau de polyester durci et du polyacrylate durci est durcie au moyen d'un rayonnement d'électrons.

3. Revêtement selon l'une quelconque des revendications précédentes, dans lequel la couche de revêtement comprend en outre une couche de protection amovible sur un second côté de la couche de revêtement, et la couche de protection est de préférence munie d'un relief sur le côté qui repose contre la couche de revêtement.

4. Revêtement selon l'une quelconque des revendications précédentes, dans lequel une couche adhésive est appliquée sur le premier côté de la couche de revêtement.

5. Revêtement selon l'une quelconque des revendications précédentes, dans lequel le premier côté de la couche de revêtement est également muni d'une couche de support qui peut être retirée de la couche de revêtement.

6. Revêtement selon l'une quelconque des revendications précédentes, dans lequel la couche de revêtement comprend un colorant ou un pigment.

7. Revêtement selon l'une quelconque des revendications précédentes, dans lequel la couche de revêtement comprend des fibres.

8. Revêtement selon l'une quelconque des revendications précédentes, dans lequel la couche de revêtement comprend un adhésif qui augmente l'élasticité.

9. Revêtement selon l'une quelconque des revendications précédentes, dans lequel des éléments d'espacement sont prévus sur un côté de surface de la couche de revêtement.

10. Revêtement selon l'une quelconque des revendications précédentes, sous forme de bandes ou d'un rouleau.

11. Procédé de fabrication d'un revêtement selon quelconque des revendications 1 à 10, comprenant les étapes qui consistent à :
- prévoir le tissu de support tissé ou non-tissé ;
- appliquer un pré-polymère de polyester et de polyacrylate sur un côté du tissu de support ;
- durcir le pré-polymère, moyennant quoi les espaces ouverts situés dans le tissu de support entre les fibres du tissu de support sont remplis avec les matériaux durcis de la couche de revêtement,
- dans lequel le tissu de support est imprégné avec une dispersion d'un liant, comme par exemple une résine d'acrylate, avant l'étape d'application du pré-polymère.

12. Procédé de fabrication d'un revêtement selon la revendication 11, comprenant le placement de la couche de protection sur le pré-polymère.
